# EUROPÄISCHE PATENTSCHRIFT

(11) **EP 1 386 097 B1**
(45) Veröffentlichungstag und Bekanntmachung des Hinweises auf die Patenterteilung: **20.07.2005**
(21) Anmeldenummer: 02742889.5
(22) Anmeldetag: 12.04.2002
(51) Int. Cl.: F16H 61/06, G05B 13/04

(54) **GETRIEBESTEUERUNG**
GEARBOX CONTROL SYSTEM
SYSTEME DE COMMANDE DE BOITE DE VITESSES

(30) Priorität: 18.04.2001 DE 10118855
(43) Veröffentlichungstag der Anmeldung: 04.02.2004
(73) Patentinhaber: ZF FRIEDRICHSHAFEN Aktiengesellschaft, 88038 Friedrichshafen (DE)
(72) Erfinder: LUTZ, Otto, 88709 Meersburg (DE); SORG, Franz, 88085 Langenargen (DE); MUSCHEL, Peter, 88045 Friedrichshafen (DE); LEIBINGER, Roland, 88677 Markdorf (DE)
(86) Internationale Anmeldenummer: PCT/EP2002/004088
(87) Internationale Veröffentlichungsnummer: WO 2002/084152

(56) Entgegenhaltungen:
- EP-A- 0 493 699
- EP-A- 0 531 567
- DE-A- 19 802 216
- DE-C- 19 511 996
- US-A- 4 855 914
- US-A- 5 719 768

## Beschreibung

Die Erfindung betrifft eine Getriebesteuerung nach der im Oberbegriff von Anspruch 1 näher definierten Art.

Mit Hilfe von Getriebesteuerungen lassen sich Getriebe individuell an verschiedene Fahrzeugtypen anpassen. Dabei ermöglicht die Getriebesteuerung die Integration von komfort-, sicherheits- und servicerelevanten Funktionen. Der Schaltkomfort steht dabei meist im Vordergrund, wird er doch vom Fahrer direkt wahrgenommen. Weitere wichtige Funktionen betreffen Schaltpunktsteuerung, Sicherheit und Diagnose. Dennoch kommt dem Schaltkomfort die größte Bedeutung zu. Ein hervorragender, während der gesamten Lebensdauer des Getriebes konstant bleibender Schaltkomfort ist die Hauptaufgabe der Getriebesteuerung.
Beeinflusst wird der Schaltkomfort durch eine Vielzahl von Parametern, so beschrieben in der ATZ Automobiltechnische Zeitschrift 93 (1991). Durch eine optimale Kombination von Reibelementen, wie Lamellenkupplungen und Bremsband, und dem entsprechenden Getriebeöl kann ein konstantes Reibwertniveau erreicht werden. Der Schaltdruck an den Lamellenkupplungen bzw. am Bremsband wird in Abhängigkeit von Parametern wie Gangstufe, Motordrehmoment, Drosselklappenwinkel zur Schub-Zug-Erkennung, Getriebeabtriebsdrehzahl, Turbinendrehzahl, Motordrehzahl, Getriebetemperatur und Motortemperatur so gesteuert, dass stets ein gleichmäßiger Schaltvorgang stattfindet. Weiterhin findet eine adaptive Drucksteuerung statt, d.h. die sich während der Betriebszeit des Getriebes ergebenden Abweichungen von bestimmten Kenngrößen werden automatisch korrigiert.
Deswegen werden permanent die Schalt- bzw. Gleitzeiten erfasst und daraus mittlere Schaltzeiten aus mehreren Schaltvorgängen ermittelt. Bei Abweichung der mittleren Schaltzeit von einer belastungs- und drehzahlabhängigen Soll-Schaltzeit wird der Kupplungsdruck so lange geändert, bis die Soll-Schaltzeit erreicht ist.

Bei dieser aus dem Stand der Technik bekannten Lösung ist es aber nicht möglich, systematische Fehler und Langzeitveränderungen zu erfassen und zu korrigieren, da Getriebeübertragungsfehler nicht erkannt werden können.

In der EP 0 531 567 A1 ist eine Getriebesteuerung für einen Kraftfahrzeugantrieb mit einem automatischen Getriebe beschrieben, die es ermöglicht, Schaltkennlinien zu adaptieren. Die Steuerung weist einen Kennlinienspeicher auf, in dem die Schaltpunkte des Getriebes abgelegt sind, und mit zusätzlichen Einrichtungen, durch die die Schaltpunkte in Abhängigkeit von Fahrparametern geändert werden können. Anhand einer in aufeinanderfolgenden Zeitintervallen durchgeführten Auswertung der Abtriebsdrehzahl des Getriebes kann durch die Schaltungsanordnung ein Ausgangssignal erzeugt werden, durch das die Schaltkennlinien an den Belastungszustand des Kraftfahrzeugs angepaßt werden können. Diese Steuerung ermöglicht jedoch keine Schaltdruckveränderungen, und somit kann auch das Getriebedrehmoment-Übertragungsverhalten nicht an Langzeitveränderungen angepaßt werden können.

Der vorliegenden Erfindung liegt die Aufgabe zugrunde eine Getriebesteuerung darzustellen, die Getriebeübertragungsfehler erkennen und somit systematische Fehler und Langzeitveränderungen ausgleichen kann.

Die der Erfindung zugrundeliegende Aufgabe wird durch eine, auch die kennzeichnenden Merkmale des Hauptanspruchs aufweisende, gattungsgemäße Getriebesteuerung gelöst.

Die Lösung der vorliegenden Aufgabe erfolgt durch Vergleichen des realen Verhaltens eines Getriebes mit dem Verhalten eines idealen Referenzgetriebes. Dieses Referenzgetriebe ist in Form eines Getriebemodells in der Getriebesteuerung implementiert. Hierzu wird der errechnete Schaltdruck über ein Drucksteuerventil an das Getriebe ausgegeben und gleichzeitig dem Referenzgetriebe in der Getriebesteuerung zugeführt. Während des Schaltvorganges erfasst die Getriebesteuerung laufend die vorher definierten Kenngrößen des Getriebes und vergleicht diese mit den entsprechenden Kenngrößen des Referenzgetriebes. Die Getriebesteuerung ermittelt die Abweichungen zwischen den Kenngrößen des realen Getriebes und des Referenzgetriebes und errechnet daraus einen Druckkorrekturwert, der bei dem nächsten Schaltvorgang berücksichtigt und dem Schaltdruck des realen Getriebes so überlagert wird, daß sich das Verhalten des realen Getriebes und des Referenzgetriebes annähern. Dieser Vorgang wird bei jedem weiteren Schaltvorgang wiederholt, bis die Abweichungen zwischen realem Getriebe und Referenzgetriebe auf ein Minimum reduziert worden sind. Im Idealfall ergibt sich eine Übereinstimmung zwischen realem Getriebe und Referenzgetriebe. Die Anpassung von realem Getriebe und Referenzgetriebe kann weitgehend unabhängig vom Betriebszustand erfolgen. Alle auftretenden, bekannten systematischen Einflußgrößen können in das Referenzgetriebe integriert und damit im Betrieb berücksichtigt werden. Beispielsweise können Lastzustände, Schaltpunkte, Beschleunigungen und Temperaturen in das Referenzgetriebe eingearbeitet werden. Die Anpassung von realem Getriebe und Referenzgetriebe kann auch unabhängig vom Verlauf des Schaltdrucks erfolgen. Deshalb kann der Schaltdruck auch beliebige Anteile einer Drucksteuerung oder einer überlagerten Druckregelung enthalten, ohne daß sich dies auf die Anpassung von realem Getriebe zum Referenzgetriebe auswirkt.

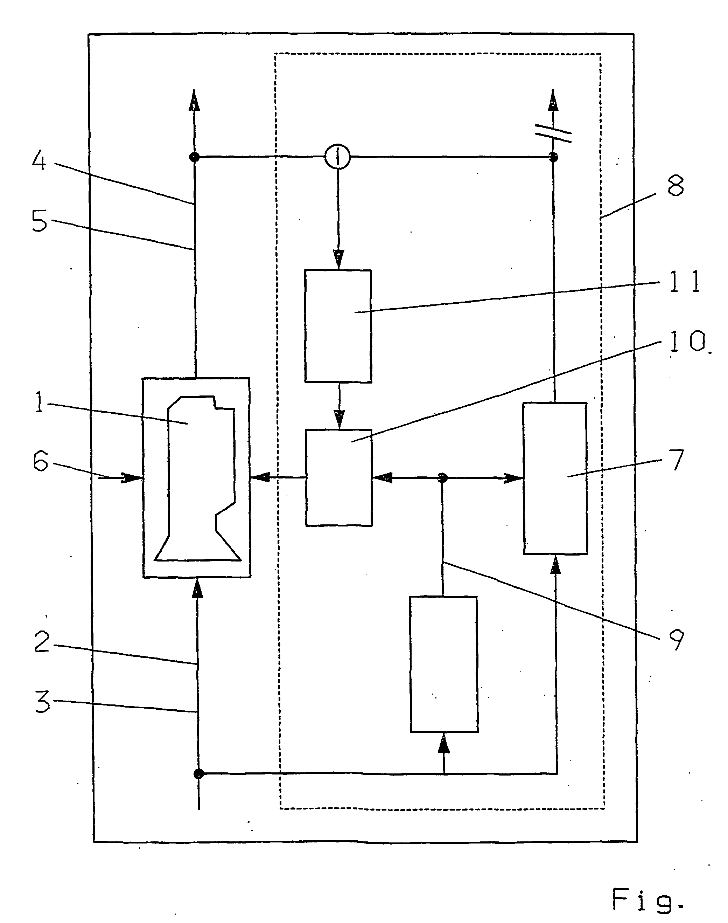

Nachfolgend ist anhand der Figur ein Ausführungsbeispiel der vorliegenden Erfindung prinzipgemäß beschrieben.

Die einzige Figur zeigt eine schematische Darstellung einer erfindungsgemäßen Getriebesteuerung. Ein reales Getriebe 1 kennzeichnet den Ist-Zustand, der durch Kenngrößen wie Eingangsdrehzahl 2 und -drehmoment 3 sowie Ausgangsdrehzahl 4 und -drehmoment 5 definiert wird. Hinzu kommen noch Störgrößen 6, die das reale Getriebe beeinflussen. Aus der Eingangsdrehzahl 2 und dem Eingangsdrehmoment 3 wird in einem idealen Referenzgetriebe 7, das als Getriebemodell in der Getriebesteuerung 8 integriert ist, ein Soll-Zustand ermittelt. Aus den Kenngrößen Eingangsdrehzahl 2 und-drehmoment 3 wird ein Schaltdruck 9 berechnet, der mit der Abweichung von Ist-Zustand und Soll-Zustand in der Getriebesteuerung 8 zu einem Druckkorrekturwert 10 weiterverarbeitet wird. Zusätzlich können Fehlerfunktionen mit Hilfe eines Adaptionsalgorithmus 11 in die Berechnung des Druckkorrekturwertes 10 integriert werden.

### Bezugszeichen

- 1: reales Getriebe
- 2: Eingangsdrehzahl
- 3: Eingangsdrehmoment
- 4: Ausgangsdrehzahl
- 5: Ausgangsdrehmoment
- 6: Störgrößen
- 7: ideales Referenzgetriebe
- 8: Getriebesteuerung
- 9: errechneter Schaltdruck
- 10: Druckkorrekturwert
- 11: Adaptionsalgorithmus

## Patentansprüche

1. Getriebesteuerung (8) zur Erkennung von systematischen Fehlern und Langzeitveränderungen, **dadurch gekennzeichnet, daß** das Verhalten eines realen Getriebes (1) mit dem Verhalten eines idealen Referenzgetriebes (7) verglichen wird, welches in Form eines Getriebemodells in der Getriebesteuerung (8) implementiert ist.

2. Getriebesteuerung (8) nach Anspruch 1, **dadurch gekennzeichnet, daß** ein errechneter Schaltdruck (9) an das reale Getriebe (1) ausgegeben und gleichzeitig dem Referenzgetriebe (7) in der Getriebesteuerung (8) zugeführt wird.

3. Getriebesteuerung (8) nach Anspruch 1 oder 2, **dadurch gekennzeichnet, daß** die Getriebesteuerung (8) während des Schaltvorganges laufend die vorher definierten Kenngrößen des Getriebes erfasst und diese mit den entsprechenden Kenngrößen des Referenzgetriebes vergleicht.

4. Getriebesteuerung (8) nach einem der vorangegangenen Ansprüche, **dadurch gekennzeichnet, daß** die Abweichungen zwischen den Kenngrößen des realen Getriebes und des Referenzgetriebes ermittelt und daraus ein Druckkorrekturwert (10) errechnet wird, der beim nächsten Schaltvorgang berücksichtigt und dem Schaltdruck des realen Getriebes so überlagert wird, daß sich die Eigenschaften des realen Getriebes (1) und des idealen Referenzgetriebes (7) annähern.

5. Getriebesteuerung (8) nach einem der vorangegangenen Ansprüche, **dadurch gekennzeichnet, daß** die Anpassung von realem Getriebe (1) und idealem Referenzgetriebe (7) weitgehend unabhängig vom Betriebszustand und vom Verlauf des Schaltdrucks erfolgen kann.

## Claims

1. Gearbox control system (8) for identifying systematic faults and long-term variations, **characterised in that** the behaviour of an actual gearbox (1) is compared with the behaviour of an ideal reference gearbox (7), which is implemented in the form of a gearbox model in the gearbox control system (8).

2. Gearbox control system (8) according to Claim 1, **characterised in that** a calculated shift pressure (9) is delivered to the actual gearbox (1) and simultaneously fed to the reference gearbox (7) in the gearbox control system (8).

3. Gearbox control system (8) according to Claim 1 or 2, **characterised in that** the gearbox control system (8) continuously detects the previously defined characteristic quantities of the gearbox during the shift operation and compares these with the corresponding characteristic quantities of the reference gearbox.

4. Gearbox control system (8) according to any one of the preceding Claims, **characterised in that** the differences between the characteristic quantities of the actual gearbox and those of the reference gearbox are established and from these a pressure correction value (10) is calculated which is taken into account in the next shift operation and superimposed on the shift pressure of the actual gearbox such that the properties of the actual gearbox (1) and those of the ideal reference gearbox (7) approach one another.

5. Gearbox control system (8) according to any one of the preceding Claims, **characterised in that** the actual gearbox (1) and the ideal reference gearbox (7) can be adapted largely independently of the operating state and of the variation of the shift pressure.

## Revendications

1. Commande de boîte de vitesses (8) pour la détection d'erreurs systématiques et de modifications à long terme, **caractérisée en ce que** le comportement d'une boîte de vitesses réelle (1) est comparé avec le comportement d'une boîte de vitesses idéale de référence (7) qui est implémentée sous la forme d'un modèle de boîte de vitesses dans la commande de boîte de vitesses (8).

2. Commande de boîte de vitesses (8) selon la revendication 1, **caractérisée en ce qu**'une pression d'enclenchement calculée (9) est envoyée à la boîte de vitesses réelle (1) et en même temps introduite dans la boîte de vitesses de référence (7) de la commande de boîte de vitesses (8).

3. Commande de boîte de vitesses (8) selon la revendication 1 ou 2, **caractérisée en ce que** la commande de boîte de vitesses (8) mesure en permanence les grandeurs caractéristiques prédéfinies de la boîte de vitesses pendant le processus d'enclenchement et compare celles-ci avec les grandeurs caractéristiques correspondantes de la boîte de vitesses de référence.

4. Commande de boîte de vitesses (8) selon l'une des revendications précédentes, **caractérisée en ce que** les écarts entre les grandeurs caractéristiques de la boîte de vitesses réelle et la boîte de vitesses de référence sont déterminés et une valeur de correction de la pression (10) en est déduite, qui est prise en compte lors du processus d'enclenchement suivant et supposée à la pression d'enclenchement de la boîte de vitesses réelle de façon à ce que les propriétés de la boîte de vitesses réelle (1) s'approchent de celles de la boîte de vitesses idéale de référence (7).

5. Commande de boîte de vitesses (8) selon l'une des revendications précédentes, **caractérisée en ce que** l'adaptation de la boîte de vitesses réelle (1) et de la boîte de vitesses idéale de référence (7) peut être réalisée indépendamment de l'état de fonctionnement et du tracé de la pression d'enclenchement.
